# EUROPEAN PATENT APPLICATION

(11) **EP 2 839 935 A1**
(43) Date of publication of application: **25.02.2015**
(21) Application number: 12874699.7
(22) Date of filing: 19.04.2012
(51) Int. Cl.: B25J 15/08, B23P 19/02, B23P 19/04

(54) **ROBOT SYSTEM**

(71) Applicant: Kabushiki Kaisha Yaskawa Denki, Kitakyushu-shi, Fukuoka 806-0004 (JP)
(72) Inventor: MURAKAMI, Hiroaki, Kitakyushu-shi Fukuoka 806-0004 (JP); TSUTSUMI, Ryosuke, Kitakyushu-shi Fukuoka 806-0004 (JP); MOTONAGA, Kenichi, Kitakyushu-shi Fukuoka 806-0004 (JP); NAGANO, Yoshihisa, Kitakyushu-shi Fukuoka 806-0004 (JP)
(74) Representative: Grünecker, Kinkeldey, Stockmair & Schwanhäusser
(86) International application number: PCT/JP2012/060597
(87) International publication number: WO 2013/157119

(57) **Abstract**

A robot system (1) according to an aspect of an embodiment includes a robot (10), a determination unit (work determination unit) (21a), a selection unit (chucking direction selection unit) (21b), and an instruction unit (21c). The robot (10) has a robot hand (hand) (17) including three or more chuck jaws. The determination unit (21a) obtains information on a member formed including a substantially ring shape, and determines a state of the member. The selection unit (21b) selects whether to hold the member with the chuck jaws from an inner peripheral side or outer peripheral side based on the determination result of the determination unit (21a). The instruction unit (21c) instructs the robot (10) to perform operations of transporting the member while holding the member with the chuck jaws based on the selection result of the selection unit (21b), and assembling a predetermined processed product using the member.

## Description

### Field

An embodiment of the disclosure relates to a robot system.

### Background

Conventionally, various robot systems have been proposed which cause robots to perform predetermined processing operations manually performed in a processed product production line and the like, on workpieces (hereinafter described as "works"), and accordingly promote efficiency of the production line.

Such robot systems include, for example, one in which a plurality of dedicated robots according to the kinds of members to be handled is placed in the middle of a work transport lane, and members are sequentially assembled to the work by the dedicated robots (see, for example, Patent Literature 1).

### Citation List

### Patent Literature

Patent Literature 1: Japanese Patent Application Laid-open No. 2003-324909

### Summary

### Technical Problem

However, the above-mentioned robot system has a problem that dedicated robots need to be placed according to the kinds of members, and it is likely to give rise to an increase in the size of the system.

In this respect, the use of general robots rather than dedicated robots is also conceivable. In such a case, however, a robot hand replacement operation according to the kind of member, and the like are required. Therefore, it is not efficient.

An aspect of an embodiment has been made considering the above, and an object thereof is to provide a robot system that can process a work efficiently without increasing the size of a system.

### Solution to Problem

A robot system according to an aspect of an embodiment includes a robot, a determination unit, a selection unit, and an instruction unit. The robot includes a robot hand having three or more chuck jaws that open and close. The determination unit configured to obtain information on a member formed including a substantially ring shape and determine a state of the member. The selection unit configured to select whether to hold the member with the chuck jaws from an inner peripheral side or an outer peripheral side based on the determination result of the determination unit. The instruction unit configured to instruct the robot to perform operations of transporting the member while holding the member with the chuck jaws based on the selection result of the selection unit, and assembling a predetermined processed product using the member.

### Advantageous Effects of Invention

An aspect of an embodiment can process a work efficiently without increasing the size of a system.

### Brief Description of Drawings

FIG. 1 is a schematic plan view illustrating an entire configuration of a robot system according to an embodiment.
FIG. 2 is a schematic perspective view illustrating a configuration of a robot.
FIG. 3A is a schematic perspective view illustrating a configuration of a hand.
FIG. 3B is a schematic perspective view illustrating the configuration of the hand.
FIG. 4A is a schematic front view for illustrating a chucking operation of the hand.
FIG. 4B is a schematic front view for illustrating the chucking operation of the hand.
FIG. 5 is a block diagram of the robot system according to the embodiment.
FIG. 6A is a schematic plan view of a work.
FIG. 6B is a schematic plan view of a first part.
FIG. 6C is a schematic plan view of a second part.
FIG. 6D is a diagram illustrating an outline of a procedure for assembling the work according to the embodiment.
FIG. 7A is an explanatory view for illustrating the procedure for assembling the work.
FIG. 7B is an explanatory view for illustrating the procedure for assembling the work.
FIG. 7C is an explanatory view for illustrating the procedure for assembling the work.
FIG. 7D is an explanatory view for illustrating the procedure for assembling the work.
FIG. 7E is an explanatory view for illustrating the procedure for assembling the work.
FIG. 7F is an explanatory view for illustrating the procedure for assembling the work.
FIG. 7G is an explanatory view for illustrating the procedure for assembling the work.
FIG. 7H is an explanatory view for illustrating the procedure for assembling the work.
FIG. 8 is a schematic perspective view illustrating an operation of sliding a transport pallet by the robot.

### Description of Embodiments

Hereinafter, an embodiment of a robot system disclosed in the present application is described in detail with reference to the accompanying drawings. The present invention is not limited by the embodiment described below.

Moreover, in the embodiment described below, a work that is a product to be processed is a bracket to be mounted on a motor. Moreover, a description is given below taking an example of a robot system that performs processing to mount a bearing and a retaining ring as intermediate members on the bracket. Moreover, a bracket may be described as a "work" below.

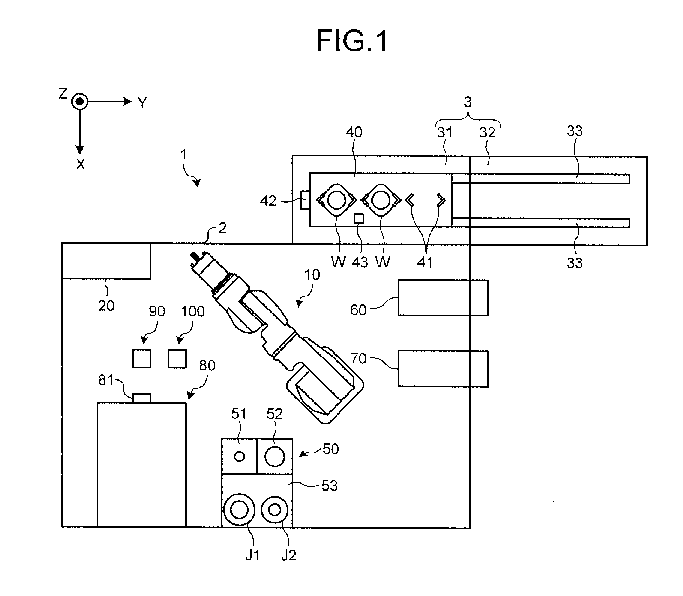

FIG. 1 is a schematic plan view illustrating an entire configuration of a robot system 1 according to the embodiment. In FIG. 1, a three-dimensional orthogonal coordinate system including a z axis in which a vertically upward direction is set as the positive direction is illustrated to facilitate the understanding of the description. The orthogonal coordinate system may also be illustrated in other drawings used in the following description. In the embodiment, the positive direction of the x axis is defined as the front of the robot system 1.

Moreover, in the following description, in terms of a component made up of a plurality of parts, a reference numeral is assigned only to one of them, and the assignment of reference numerals to the others may be omitted. In such a case, the one to which the reference numeral has been assigned and the others are assumed to have a similar configuration.

As illustrated in FIG. 1, the robot system 1 includes a cell 2 forming a cuboid work space. Moreover, the robot system 1 includes a work supply unit 3 installed side by side to the cell 2. The cell 2 communicates with the work supply unit 3 via an opening whose illustration is omitted.

The work supply unit 3 is partitioned into a robot side area 31 and a worker side area 32. Both are connected by a guide rail 33. A transport pallet 40 is slidably provided on the guide rail 33.

The transport pallet 40 is a housing unit for works W before and after processing. The transport pallet 40 includes a stocker 41. The stockers 41 house the works W on multiple stages.

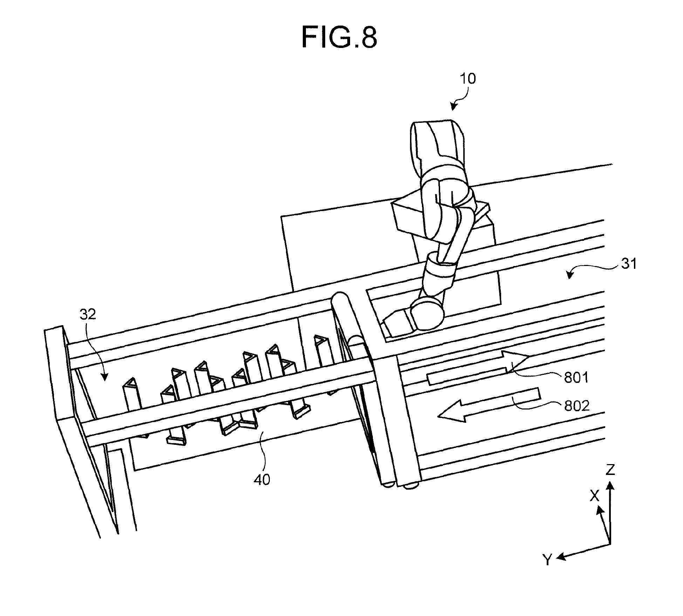

Moreover, the transport pallet 40 includes handle portions 42 and 43 formed in shapes that a robot 10 described below can hold using a robot hand (hereinafter described as the "hand"). The robot 10 slides the transport pallet 40 to the robot side area 31 or the worker side area 32 while holding the handle portions 42 and 43. This point is described below in a description with FIG. 8.

FIG. 1 illustrates a state where the transport pallet 40 has been slid to the robot side area 31.

In the robot side area 31, the robot 10 takes out the work W before processing from the stocker 41 and stores the work W after processing in the stocker 41. Moreover, in the worker side area 32, the worker takes out the work W after processing from the stocker 41 and stores the work W before processing in the stocker 41.

Moreover, the robot system 1 includes, in the cell 2, the robot 10, a controller 20, a workbench 50, a first part supply unit 60, a second part supply unit 70, dry shelving 80, an adhesive application unit 90, and a camera unit 100.

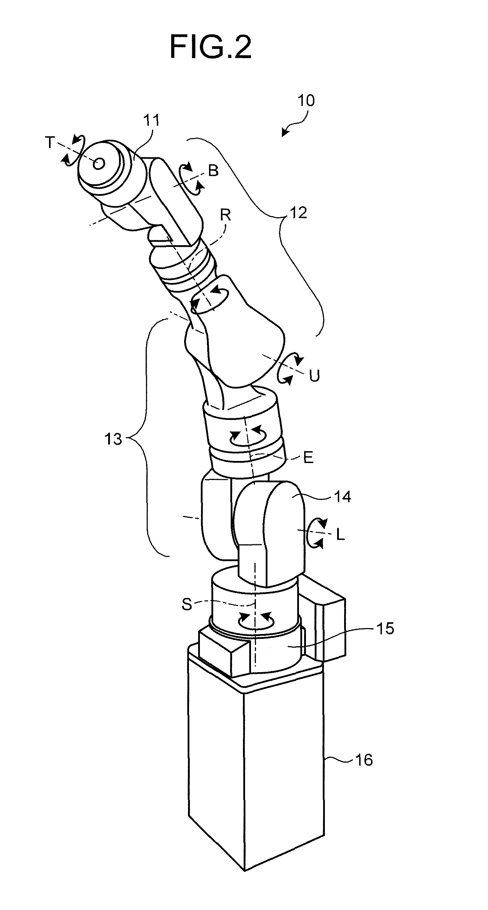

The robot 10 is a single-arm manipulator that operates to process the work W at the operation instruction of the controller 20, and has the hand described below at a mobile terminal portion of the arm (hereinafter described as the "arm"). The configuration of the robot 10 is described in detail below with reference to FIGs. 2 to 4B.

The controller 20 is connected to various devices including the robot 10 in the cell 2, and a higher-level device such as a host computer in such a manner as to be able to communicate.

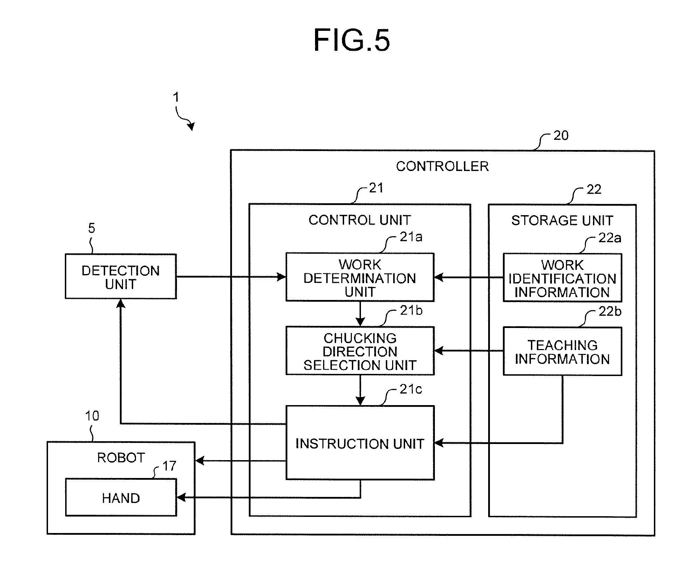

The controller 20 is a controller that controls the operation of various devices connected, and is configured including various control equipment, arithmetic processing units, storage devices, and the like. The configuration of the controller 20 is described in detail below with reference to FIG. 5.

FIG. 1 illustrates the controller 20 having one casing. However, the configuration is not limited to this, but may include, for example, a plurality of casings associated respectively with various devices targeted for control. Moreover, the controller 20 may be placed outside the cell 2.

The workbench 50 is a workbench used when the robot 10 performs a processing operation on the work W. The workbench 50 includes a first workbench 51, a second workbench 52, and a jig storage unit 53. The first workbench 51 and the second workbench 52 are used, depending on the kind of work W.

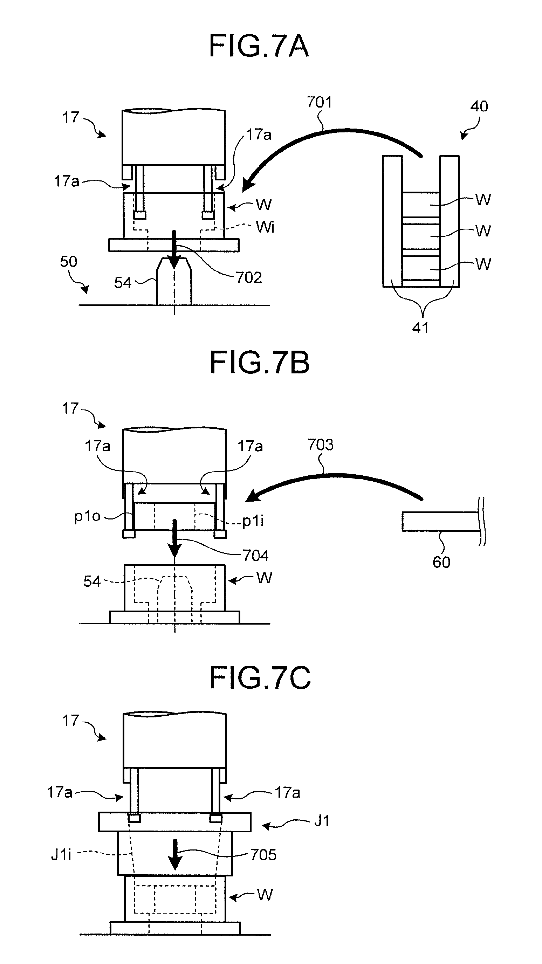

The jig storage unit 53 is a unit for storing jigs J1 and J2 used for processing operations of the robot 10. The jigs J1 and J2 are described in detail in a series of operations of the robot 10 that is described below with reference to FIGs. 7A to 7H.

The first part supply unit 60 is a unit that supplies, into the cell 2, a bearing (hereinafter described as the "first part") being an intermediate member to be mounted on the bracket (that is, the work W).

The second part supply unit 70 is a unit that supplies, into the cell 2, a retaining ring (hereinafter described as the "second part") also being an intermediate member.

The dry shelving 80 is a housing unit temporary for drying the work W where the first and second parts have been mounted and an adhesive has been applied to the mounting locations, for a predetermined period of time. The dry shelving 80 includes multiple shelves along the z axis direction. Each shelf includes a handle portion 81 in a similar shape to those of the handle portions 42 and 43.

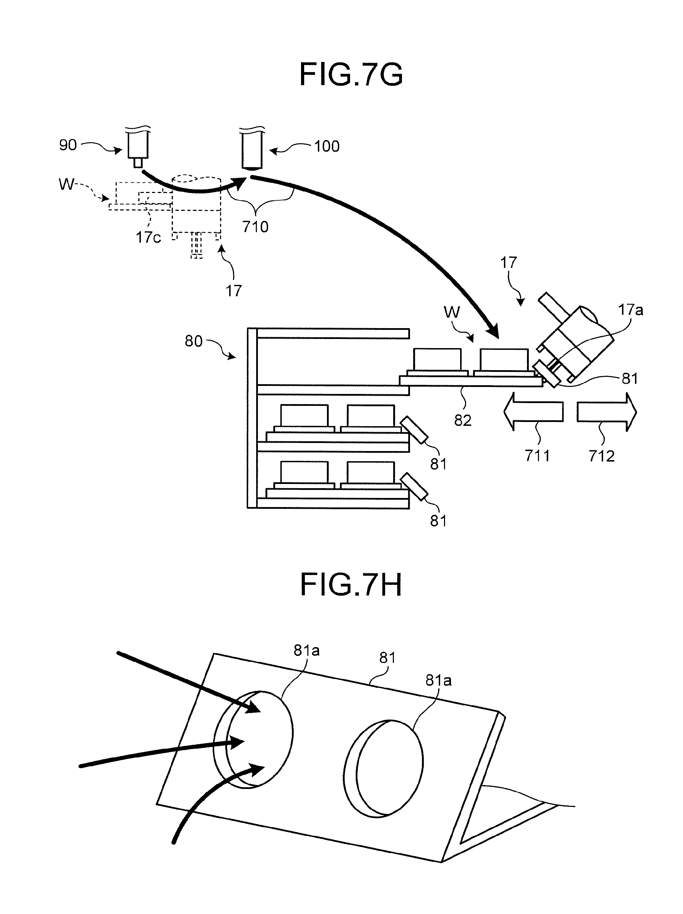

The robot 10 can perform a drawing operation or storing operation by sliding each shelf of the dry shelving 80 while holding the handle portion 81 with the hand. The point is described in detail below in a description with FIG. 7G.

The adhesive application unit 90 is a unit that applies an adhesive to the mounting locations of the first and second parts. The camera unit 100 is an imaging device having a predetermined imaging area. It is unclear from FIG. 1, but the adhesive application unit 90 and the camera unit 100 are assumed to be suspended above the robot 10 from a ceiling section of the cell 2.

Next, a configuration example of the robot 10 is described with reference to FIG. 2. FIG. 2 is a schematic perspective view illustrating the configuration of the robot 10.

As illustrated in FIG. 2, the robot 10 is a single-arm multi-axis robot. Specifically, the robot 10 includes a first arm section 11, a second arm section 12, a third arm section 13, a fourth arm section 14, a fifth arm section 15, and a base section 16.

A proximal end portion of the first arm section 11 is supported by the second arm section 12. A proximal end portion of the second arm section 12 is supported by the third arm section 13, and its distal end portion supports the first arm section 11.

A proximal end portion of the third arm section 13 is supported by the fourth arm section 14, and its distal end portion supports the second arm section 12. A proximal end portion of the fourth arm section 14 is supported by the fifth arm section 15 and its distal end portion supports the third arm section 13.

A proximal end portion of the fifth arm section 15 is supported by the base section 16 fixed to a floor surface of the cell 2 (see FIG. 1) or the like, and its distal end portion supports the fourth arm section 14.

Moreover, an actuator is mounted on each of joints (not illustrated) being coupling portions of the first arm section 11 to the fifth arm section 15. The robot 10 can perform multi-axis operations by the drive of the actuators.

Specifically, the actuator of the joint coupling the first arm section 11 and the second arm section 12 rotates the first arm section 11 around a B axis. Moreover, the actuator of the joint coupling the second arm section 12 and the third arm section 13 rotates the second arm section 12 around a U axis.

Moreover, the actuator of the joint coupling the third arm section 13 and the fourth arm section 14 rotates the third arm section 13 around an L axis.

Moreover, the actuator of the joint coupling the fourth arm section 14 and the fifth arm section 15 rotates the fourth arm section 14 around an S axis.

Moreover, the robot 10 includes discrete actuators that respectively rotate the first arm section 11 around a T axis, the second arm section 12 around an R axis, and the third arm section 13 around an E axis.

In other words, the robot 10 has seven axes. The robot 10 performs various multi-axis operations that combine the seven axes based on the operation instructions of the controller 20. Specifically, the operation instruction of the controller 20 is notified as a driving instruction to each of the above-mentioned actuators.

A distal end portion of the first arm section 11 is a mobile terminal portion of the robot 10. A hand 17 (described below) is mounted on the mobile terminal portion. Next, the hand 17 is described.

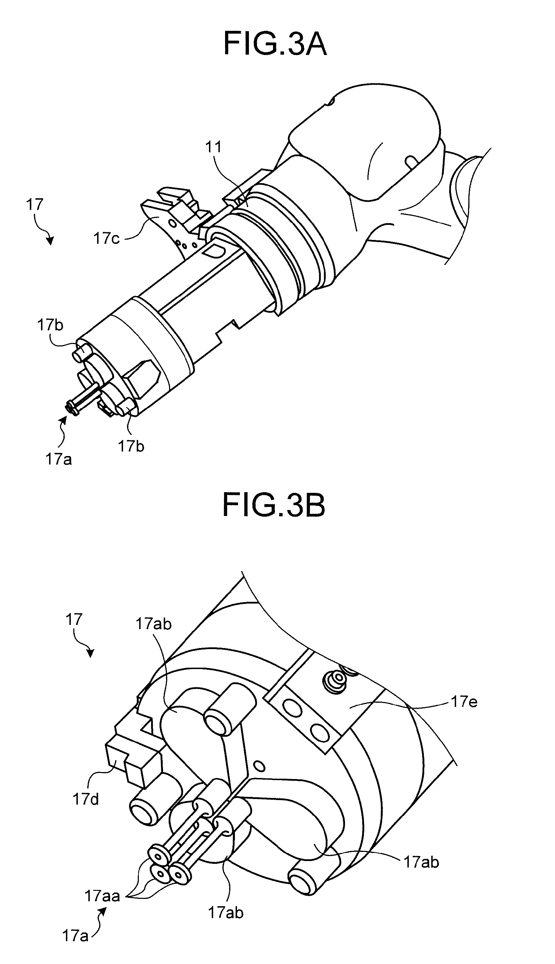

FIGs. 3A and 3B are schematic perspective views illustrating the configuration of the hand 17. A distal end portion of the hand 17 illustrated in FIG. 3A is expanded and illustrated in FIG. 3B.

As illustrated in FIG. 3A, the hand 17 mounted on the first arm section 11 includes a chuck portion 17a, projections 17b, and a gripper 17c.

Moreover, as illustrated in FIG. 3B, the chuck portion 17a includes three chuck jaws 17aa. Proximal end portions of the chuck jaws 17aa are respectively supported by discrete rotary portions 17ab. The rotary portion 17ab is formed to a substantially teardrop shape, and placed rotatably around a rotation axis parallel to an extension direction of the hand 17.

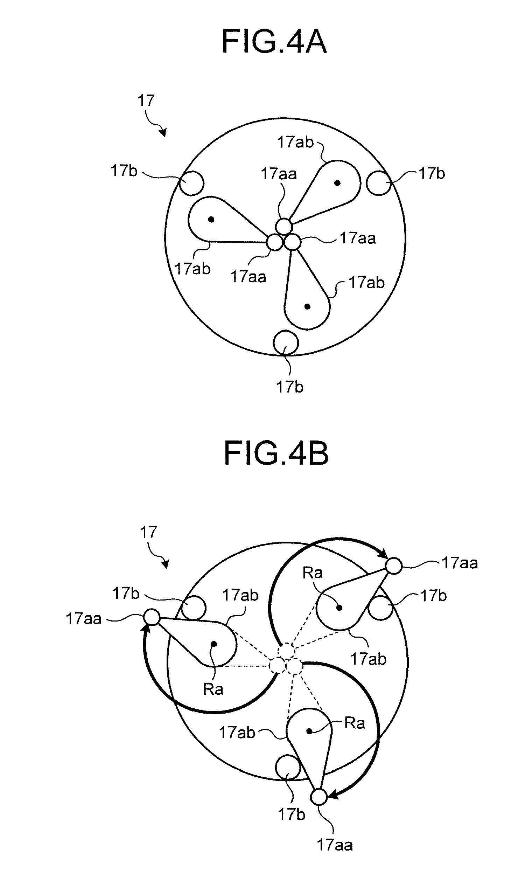

The chucking operation of the hand 17 using the chuck portion 17a is described with reference to FIGs. 4A and 4B. FIGs. 4A and 4B are schematic front views for illustrating the chucking operation of the hand 17. FIG. 4A illustrates a state where the chuck jaws 17aa are closed. FIG. 4B illustrates a state where the chuck jaws 17aa are open.

As illustrated in FIG. 4A, the state where the chuck jaws 17aa are closed indicates a state where the chuck jaws 17aa are gathered in the center of the distal end portion of the hand 17. Such a state corresponds to a state where the rotary portions 17ab are not being driven.

Moreover, as illustrated in FIG. 4B, the state where the chuck jaws 17aa are open indicates a state where each of the rotary portions 17ab is rotated and driven around a rotation axis Ra parallel to the extension direction of the hand 17, and accordingly the chuck jaws 17aa are opened outward of the hand 17 while each of the chuck jaws 17aa takes an arc path. FIG. 4B illustrate a state where the chuck jaws 17aa are opened to the maximum until coming into contact with the projections 17b.

The rotary portions 17ab are rotated and driven in the reverse direction to when opened and accordingly the chuck jaws 17aa are closed toward the center of the distal end portion of the hand 17 while taking the same arc paths.

The opening and closing mechanism of the chuck jaws 17aa is configured in this manner, using the rotary portions 17ab that rotate around their respective rotation axes Ra parallel to the extension direction of the hand 17. Accordingly, it is possible to obtain an effect that the dimension width of the hand 17 is reduced, and the hand 17 can be made thinner. This point is advantageous, for example, when a ring-shaped member is chucked from an inner periphery side (which is described below).

Moreover, the rotary portions 17ab are formed to a substantially teardrop shape, and their thin distal end portions are placed in such a manner as to abut one another. Accordingly, it is also possible to obtain an effect that the rotary portions 17ab can rotate without interfering with one another.

In the robot system 1 according to the embodiment, the rotation amount of the rotary portions 17ab is controlled at the operation instruction of the controller 20. Accordingly, the opening/closing amount of the chuck jaws 17aa is made variable. Consequently, a variety of kinds of chucking target objects having different dimensions and the like (that is, the work W, the first part, and the like) can be handled.

Moreover, the hand 17 can open the chuck jaws 17aa outward from the center of the distal end portion of the hand 17. Accordingly, when the chucking target object has a hollow shape such as a ring, the chuck jaws 17aa are pressed against the inner periphery side of the chucking target object while being opened, and accordingly the hand 17 can chuck the chucking target object.

Naturally, it is needless to say that the chucking target object can be chucked by being caught by the chuck jaws 17aa from the outer periphery side.

In the robot system 1 according to the embodiment, consideration is given to the advantage of the hand 17 that can chuck the chucking target object from both the inner and outer periphery sides, and the chucking direction such as the inner or outer periphery side can be selected depending on the kind of chucking target object, the processing form, and the like.

Consequently, the robot 10 can be operated according to the condition. Accordingly, the work W can be processed efficiently.

In the following description, a chucking method where the chucking direction is set to the outer periphery side may be described as "outer-periphery chuck," and a chucking method where the chucking direction is set to the inner periphery side as "inner-periphery chuck."

Return to the description of FIG. 3B. The hand 17 further includes a swirl-stop portion 17d and a sensor portion 17e. The swirl-stop portion 17d is a member to prevent a chucking target object with a slippery inner periphery side from rotating by being brought into contact with an end of the chucking target object when the chucking target object is "inner-periphery chucked" by the chuck jaws 17aa. The swirl-stop portion 17d is preferred to be formed of a rubber material or the like.

The sensor portion 17e is a detection device configured using a color sensor and the like, and is used for, for example, identification of a chucking target object chucked by the chuck jaws 17aa.

The projections 17b and the gripper 17c, which have been illustrated in FIG. 3A, are described in a series of operations of the robot 10 described below with reference to FIGs. 7A to 7H.

Next, a block configuration of the robot system 1 according to the embodiment is described with reference to FIG. 5. FIG. 5 is a block diagram of the robot system 1 according to the embodiment. In FIG. 5, only components necessary for the description of the robot system 1 are illustrated, and a description of general components is omitted.

Moreover, in the description with FIG. 5, the description is focused on an internal configuration of the controller 20. A simple description may be given of various devices that have already been illustrated in FIG. 1.

As illustrated in FIG. 5, the controller 20 includes a control unit 21 and a storage unit 22. The control unit 21 further includes a work determination unit 21a, a chucking direction selection unit 21b, and an instruction unit 21c.

A detection unit 5 illustrated outside the controller 20 is a block indicating the whole of the detection devices such as the above-mentioned camera unit 100 (see FIG. 1) and sensor portion 17e (see FIG. 3B).

The control unit 21 performs the overall control of the controller 20. The work determination unit 21a receives detection information containing the state of the work W detected by the detection unit 5, and the like, and determines the state of the work W based on the detection information.

The state determination of the work W includes determination of the identification of the work W, which is made by matching the detection information and work identification information 22a. The work identification information 22a is information on the identification of the work W such as the shape and dimensions of the work W, and is preregistered in the storage unit 22.

Moreover, the state determination is also made for not only the work W but also the whole of chucking target objects to be chucked by the hand 17. Moreover, the work determination unit 21a notifies the determination content to the chucking direction selection unit 21b.

The chucking direction selection unit 21b selects the chucking direction of the chuck jaws 17aa based on the determination content notified by the work determination unit 21a, teaching information 22b, and the like. Moreover, the chucking direction selection unit 21b notifies the selected chucking direction to the instruction unit 21c.

The instruction unit 21c generates operation signals that operate various devices such as the robot 10, and the hand 17 and the detection unit 5, which are included in the robot 10, based on the notified chucking direction and the teaching information 22b to output to various devices.

The teaching information 22b is information containing teaching data for various devices of the robot system 1, and is preregistered via an input device (such as a programming pendant) whose illustration is omitted. The teaching data contains a form of the processing operation performed on the work W (specifically, information such as how and which members are assembled to the work W in what order).

The storage unit 22 is a storage device such as a hard disk drive or a nonvolatile memory. The work identification information 22a and the teaching information 22b are stored in the storage unit 22. The contents of the work identification information 22a and the teaching information 22b have already been described. Therefore, their descriptions are omitted here.

Moreover, the components illustrated inside the controller 20 in FIG. 5 may not be placed only in the controller 20. For example, an improvement in throughput may be promoted by storing any or all of the work identification information 22a and the teaching information 22b, which are stored in the storage unit 22, in an internal memory of the robot 10.

Moreover, the description with FIG. 5 illustrates an example where the controller 20 determines the state of the work W based on the detection information from the detection unit 5, the preregistered work identification information 22a, and the like. However, necessary information may be sequentially obtained from a higher-level device connected to the controller 20 in such a manner as to be able to communicate with each other.

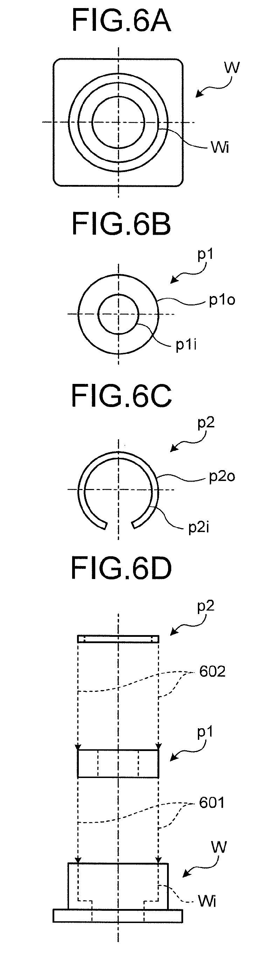

Next, a description is given of the shapes of the work W, a first part p1, and a second part p2 according to the embodiment, and an outline of a procedure for assembling the work W, with reference to FIGs. 6A to 6D. FIG. 6A is a schematic plan view of the work W. FIG. 6B is a schematic plan view of the first part p1. FIG. 6C is a schematic plan view of the second part p2. Moreover, FIG. 6D is a diagram illustrating the outline of the procedure for assembling the work W.

As illustrated in FIG. 6A, the work W being a bracket is a member having a ring shape, and includes an inner peripheral portion Wi. Moreover, as illustrated in FIG. 6B, the first part p1 being a bearing is a ring-shaped member, and includes an inner peripheral portion p1i and an outer peripheral portion p1o. Moreover, as illustrated in FIG. 6C, the second part p2 being a retaining ring is a ring-shaped member, and includes an inner peripheral portion p2i and an outer peripheral portion p2o.

As illustrated in FIG. 6D, when the work W is assembled, the first part p1 is mounted in the inner peripheral portion Wi of the work W first (see arrows 601 in the figure).

Next, the second part p2 is mounted on an upper part of the mounted first part p1 (see arrows 602 in the figure).

Although not illustrated, an adhesive is applied to the mounting locations of the first part p1 and the second part p2 to fix them. Consequently, the procedure for assembling one work W ends.

The transport of the work W, the first part p1, and the second part p2 during the assembly, the sliding of the above-mentioned transport pallet 40 (see FIG. 1) and the dry shelving 80 (see FIG. 1), and the like are all performed using the hand 17 of the robot 10. Therefore, there is no need to provide an additional transport mechanism. Accordingly, an increase in the size of the system can be avoided.

Hereinafter, a further detailed description is given of the procedure for assembling the work W, which has been described with reference to FIG. 6D, including a series of operations of the robot 10 that can avoid an increase in the size of the system, with reference to FIGs. 7A to 7H. FIGs. 7A to 7H are explanatory views for illustrating the procedure for assembling the work W.

All of a series of operations of the robot 10 illustrated below are assumed to be instructed by the controller 20 as described above.

Firstly, as illustrated in FIG. 7A, while "inner-periphery chucking" the inner peripheral portion Wi with the chuck portion 17a of the hand 17, the robot 10 takes out the work W from the stocker 41 of the transport pallet 40 and transports the work W (see an arrow 701 in the figure). The work W is placed on the workbench 50 with a guiding jig 54 provided on the workbench 50 as the center (see an arrow 702 in the figure). The guiding jig 54 is a jig for guiding the first part p1.

Next, as illustrated in FIG. 7B, while "outer-periphery chucking" the outer peripheral portion p1o with the chuck portion 17a of the hand 17, the robot 10 takes out the first part p1 from the first part supply unit 60 and transports the first part p1 (see an arrow 703 in the figure).

The reason to "outer-periphery chuck" here is that it is necessary to guide the inner peripheral portion p1i of the first part p1 in contact with a peripheral edge of the guiding jig 54.

The robot 10 then mounts the first part p1 in the inner peripheral portion Wi of the work W while guiding the first part p1 with the guiding jig 54 (see an arrow 704 in the figure).

Next, as illustrated in FIG. 7C, while "inner-periphery chucking" an inner peripheral portion J1i with the chuck portion 17a of the hand 17, the robot 10 places the jig J1 on the work W (see an arrow 705 in the figure). The inner peripheral portion J1i of the jig J1 is formed to a taper shape that gradually reduces in diameter toward a lower side.

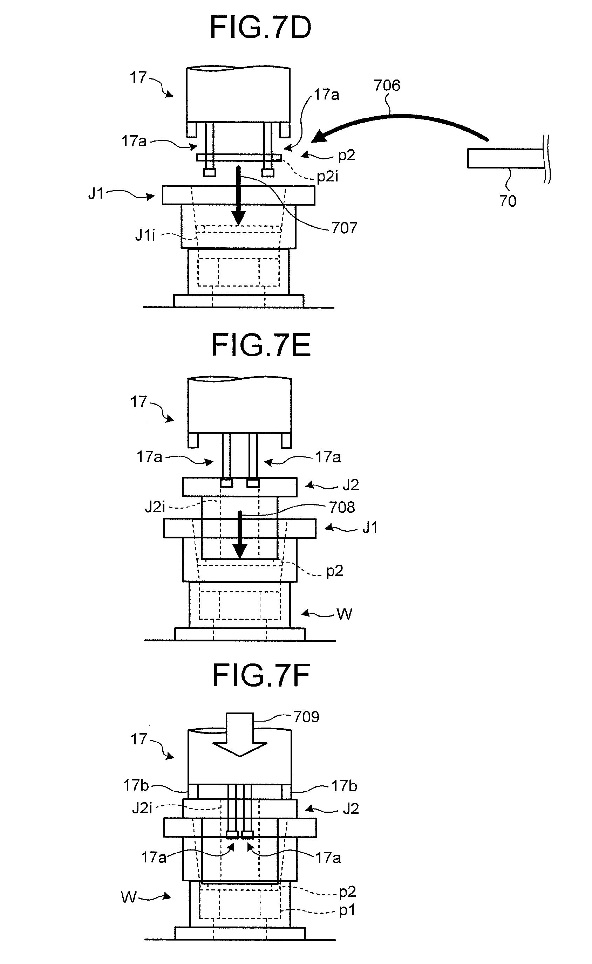

Next, as illustrated in FIG. 7D, while "inner-periphery chucking" the inner peripheral portion p2i with the chuck portion 17a of the hand 17, the robot 10 takes out the second part p2 from the second part supply unit 70 and transports the second part p2 (see an arrow 706 in the figure).

The reason to "inner-periphery chuck" here is to temporarily place the outer peripheral portion p2o (see FIG. 6C) of the second part p2 in contact with the inner peripheral portion J1i of the jig J1 (see an arrow 707 of FIG. 7D).

As illustrated in FIG. 7E, while "inner-periphery chucking" an inner peripheral portion J2i with the chuck portion 17a of the hand 17, the robot 10 places a jig J2 on the second part p2 temporarily placed in the jig J1 (see an arrow 708 in the figure).

Next, as illustrated in FIG. 7F, the robot 10 closes the chuck portion 17a of the hand 17, puts the chuck portion 17a in a hollow portion inside the inner peripheral portion J2i of the jig J2, and brings the projections 17b of the hand 17 into contact with an end of the jig J2.

The jig J2 is then pressed from a direction indicated by an arrow 709 in the figure to press the second part p2 onto the upper part of the first part p1 mounted in the work W.

Next, as illustrated in FIG. 7G, the robot 10 transports the work W to the adhesive application unit 90 while holding the work W with the gripper 17c of the hand 17, and applies an adhesive to the mounting locations of the first part p1 and the second part p2.

The work W is subsequently transported to the imaging area of the camera unit 100 to inspect the adhesive application state with imaging data. The work W is then transported to and stored on the dry shelving 80 (see arrows 710 in the figure). The reason why the gripper 17c is used in the procedure is to reduce the risk of the chuck portion 17a being contaminated by the adhesive.

As illustrated in FIG. 7G, the robot 10 performs an operation of sliding and drawing a dry pallet 82 being a shelf of the dry shelving 80 (see an arrow 712 in the figure), or an operation of storing the dry pallet 82 (see an arrow 711 in the figure). The robot 10 chucks the handle portion 81 attached to the dry pallet 82 with the chuck portion 17a of the hand 17, and accordingly these operations can be performed.

As illustrated in FIG. 7H, this can be achieved, for example, by forming the handle portion 81 to a shape having a drilled hole portion 81a. In such a case, the hand 17 is required to "inner-periphery chuck" the hole portion 81a with the chuck jaws 17aa from the inside of the hole portion 81a (see three arrows in the figure).

The work W that stored on the dry shelving 80 in FIG. 7G and finished being dried for a predetermined time is transported by the hand 17 and stored in the stocker 41. The procedure for assembling one work W then ends.

The above-mentioned handle portion 42 (see FIG. 1) and handle portion 43 (see FIG. 1) are formed to a similar shape to that of the handle portion 81 illustrated in FIG. 7H. Accordingly, the robot 10 can perform the operation of sliding the transport pallet 40 (see FIG. 1). Such a case is illustrated in FIG. 8.

FIG. 8 is a schematic perspective view illustrating the operation of sliding the transport pallet 40 by the robot 10. In other words, as illustrated in FIG. 8, the robot 10 performs an operation of chucking the handle portion 42 (illustration omitted) or the handle portion 43 (illustration omitted) with the chuck jaws 17aa and pulling the hand 17. Accordingly, the transport pallet 40 can be slid from the worker side area 32 to the robot side area 31 (see an arrow 801 in the figure).

Moreover, similarly, the transport pallet 40 can be slid from the robot side area 31 to the worker side area 32 by performing a pushing operation with the hand 17 (see an arrow 802 in the figure).

Consequently, the robot system 1 can cause the robot 10 to perform all the steps of processing of the work W from the carrying in of the work W into the cell 2 to carrying out without replacing the hand 17. In other words, the work W can be processed efficiently.

Moreover, various chucking target objects including the work W can be chucked and transported only with the hand 17 of the robot 10. Accordingly, there is no need to provide a drive mechanism dedicated for transport or the like. In other words, it can contribute to the avoidance of an increase in the size of the system.

FIG. 8 illustrates the case where the transport pallet 40 includes one tier, but the transport pallet 40 may include multiple tiers along the z axis.

For example, when the transport pallet 40 includes two vertical tiers, the guide rail 33 that circulates across the two upper and lower tiers inside the work supply unit 3 (see FIG. 1) may be placed to slide the transport pallet 40 along the guide rail 33.

In this manner, the transport pallet 40 is configured in a circulatable manner. Accordingly, the work W can be carried in and out without backing up, and therefore the efficiency can be further promoted.

As described above, the robot system according to the embodiment includes the robot, the determination unit (work determination unit), the selection unit (chucking direction selection unit), and the instruction unit. The robot includes the robot hand (hand) having three or more chuck jaws. The determination unit obtains information on a member formed including a substantially ring shape and determines the state of the member. The selection unit selects whether to hold the member with the chuck jaws from the inner peripheral side or outer peripheral side based on the determination result of the determination unit. The instruction unit transports the member while holding the member with the chuck jaws based on the selection result of the selection unit, and instructs the robot to perform the operation of assembling a predetermined processed product using the member.

Therefore, the robot system according to the embodiment can process a work efficiently without increasing the size of the system.

In the above-mentioned embodiment, a description has been given taking, as an example, the case where the work is a bracket to be mounted on a motor. However, the work is not limited to this, and is simply required to be a member having a substantially ring shape.

Moreover, in the above-mentioned embodiment, a description has been given taking, as an example, the case where the number of chuck jaws is three. However, the number of chuck jaws is not limited and is required to be at least three or more.

Moreover, in the above-mentioned embodiment, a description has been given taking, as an example, the case where the chuck jaws are rotated by the rotation mechanism to be opened and closed. However, the chuck jaws may be opened and closed by, not limited to the rotation mechanism, but, for example, being linearly moved by a linear motion mechanism.

Moreover, the units constructed as separate bodies in the above-mentioned embodiment may be constructed as one unit. For example, the first and second part supply units may be constructed as one intermediate member supply unit.

Moreover, the above-mentioned embodiment has illustrated a single-arm robot, but is not limited to this. For example, a multiple arm robot including two or more arms may be used. Moreover, the above-mentioned embodiment has illustrated a multi-axis robot having seven axes. However, the number of axes is not limited.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

1 Robot system
2 Cell
3 Work supply unit
5 Detection unit
10 Robot
11 First arm section
12 Second arm section
13 Third arm section
14 Fourth arm section
15 Fifth arm section
16 Base section
17 Hand
17a Chuck portion
17aa Chuck jaw
17ab Rotary portion
17b Projection
17c Gripper
17d Swirl-stop portion
17e Sensor portion
20 Controller
21 Control unit
21a Work determination unit
21b Chucking direction selection unit
21c Instruction unit
22 Storage unit
22a Work identification information
22b Teaching information
31 Robot side area
32 Worker side area
33 Guide rail
40 Transport pallet
41 Stocker
42 Handle portion
43 Handle portion
50 Workbench
51 First workbench
52 Second workbench
53 Jig storage unit
54 Guiding jig
60 First part supply unit
70 Second part supply unit
80 Dry shelving
81 Handle portion
81a Hole portion
82 Dry pallet
90 Adhesive application unit
100 Camera unit
J1 Jig
J2 Jig
W Work
p1 First part
p2 Second part

## Claims

1. A robot system comprising:
a robot including a robot hand having three or more chuck jaws that open and close;
a determination unit configured to obtain information on a member formed including a substantially ring shape and determine a state of the member;
a selection unit configured to select whether to hold the member with the chuck jaws from an inner peripheral side or an outer peripheral side based on the determination result of the determination unit; and
an instruction unit configured to instruct the robot to perform operations of transporting the member while holding the member with the chuck jaws based on the selection result of the selection unit, and assembling a predetermined processed product using the member.

2. The robot system according to claim 1, wherein
the robot hand includes a projection provided projecting, parallel to an extension direction of the chuck jaw, from the vicinity of a proximal end portion of the chuck jaw, and
the instruction unit instructs the robot to perform an operation of bringing the projection into contact with an end of the member and pressing the member after transporting the member to a predetermined position.

3. The robot system according to claim 1 or 2, wherein the robot hand further includes a swirl-stop portion provided in the vicinity of the proximal end portion of the chuck jaw, the swirl-stop portion being configured to regulate rotation of the member in a circumferential direction by being brought into contact with the end of the member upon the member being held with the chuck jaws from the inner peripheral side.

4. The robot system according to claims 1, 2, or 3, further comprising a housing unit formed in a shelving form having a handle portion with a hole portion, the housing unit being configured to temporarily house the processed product after assembly, wherein the instruction unit instructs the robot to perform an operation of sliding the housing unit while holding the housing unit with the chuck jaws from an inside of the hole portion in the handle portion to open or close the housing unit.

5. The robot system according to claim 4, further comprising a transport pallet including the handle portion and configured to house the processed products before and after assembly, wherein the instruction unit instructs the robot to perform an operation of sliding the transport pallet while holding the transport pallet with the chuck jaws from the inside of the hole portion in the handle portion to carry in and out the transport pallet to and from a work space of the robot.
